# EUROPÄISCHE PATENTSCHRIFT

(11) **EP 2 994 984 B1**
(45) Veröffentlichungstag und Bekanntmachung des Hinweises auf die Patenterteilung: **18.10.2017**
(21) Anmeldenummer: 14739747.5
(22) Anmeldetag: 08.07.2014
(51) Int. Cl.: H02M 1/32, H02M 7/12, H02M 7/483, H02M 7/487

(54) **DREIPUNKT-STROMRICHTER**
THREE-LEVEL INVERTER
CONVERTISSEUR DE TROIS POINTS

(30) Priorität: 17.07.2013 DE 102013213986
(43) Veröffentlichungstag der Anmeldung: 16.03.2016
(73) Patentinhaber: Siemens Aktiengesellschaft, 80333 München (DE)
(72) Erfinder: ECKEL, Hans-Günter, 18059 Rostock (DE)
(86) Internationale Anmeldenummer: PCT/EP2014/064577
(87) Internationale Veröffentlichungsnummer: WO 2015/007569

(56) Entgegenhaltungen:
- EP-A1- 2 323 249
- CN-U- 201 869 116
- CN-U- 202 856 630
- CN-Y- 201 118 467
- DE-A1-102005 049 208
- JP-A- 2001 028 881

## Beschreibung

Die Erfindung bezieht sich auf einen Dreipunkt-Stromrichter. Als Dreipunkt-Stromrichter wird eine elektronische Schaltung bezeichnet, die mittels Leistungshalbleitern (insbesondere Halbleiterschaltern und/oder Dioden) eine zugeführte Eingangsspannung in eine Ausgangsspannung wandelt, wobei diese Ausgangsspannung im statischen Fall - insbesondere zu jedem einzelnen Zeitpunkt - drei diskrete Werte (oder Potentialniveaus) annehmen kann, beispielsweise im Verhältnis zu der Eingangsspannung die Werte "0", "1/2" und "1".

Bei dem Dreipunkt-Stromrichter handelt es sich insbesondere um einen Dreipunkt-Wechselrichter, der eine eingangsseitig zugeführte Gleichspannung in eine in einen Laststromkreis ausgegebene Wechselspannung wandelt. Die Erfindung bezieht sich dabei insbesondere auf einen Dreipunkt-Stromrichter, der für den Einsatz im Megawattbereich (z.B. im Bereiche von 1 MW - 20 MW) ausgelegt ist, beispielsweise bei einer Windkraftanlage oder in einem Walzwerk.

Bei einem solchen Dreipunkt-Stromrichter können Einfachfehler (d.h. ein Ausfall eines einzelnen Leistungshalbleiters des Stromrichters) dazu führen, dass weitere Leistungshalbleiter als Folgefehler ausfallen. Als Ausfall wird dabei insbesondere ein Sperrversagen des jeweiligen Leistungshalbleiters bezeichnet, bei dem der Leistungshalbleiter permanent (auch gegebenenfalls in einer baubedingten Sperrrichtung) elektrisch leitend wird. Der Ausfall mehrerer Leistungshalbschalter kann zu niederinduktiven Kurzschlusskreisen innerhalb des Stromrichters oder zu mehrpoligen Kurzschlüssen für die angeschlossene Last führen. Der dabei auftretende Kurzschlussstrom kann zu einem hohen Stoßmoment in einer als Last an den Stromrichter angeschlossenen elektrischen Maschine führen. Das für den Kurzschlussfall zu erwartende Stoßmoment kann dabei auslegungsrelevant für das mechanische System der angeschlossenen elektrischen Maschine sein und somit eine überdimensionierte Auslegung der Mechanik dieser Maschine erfordern.

Zudem führt der Stoßstrom im Kurzschlussfall zu einer erheblichen Belastung der Dioden im lastseitigen Kurzschlusskreis, im Falle eines vollständigen Querzünders sogar aller Dioden, die an denselben Gleichspannungskreis angeschlossen sind. Um die Dioden vor einer Zerstörung durch den Stoßstrom zu schützen, sind einem Stromrichter häufig wechselstromseitig Drosseln vorgeschaltet. Diese Drosseln führen in erheblichem Maße zu höheren Kosten, größerer Masse und größerem Platzbedarf. Zudem bedingen diese Drosseln auch erhöhte Verluste und eine reduzierte Ausgangsspannung.

Ein Dreipunkt-Stromrichter nach dem Oberbegriff des Anspruchs 1 ist aus EP 2 323 249 A1 bekannt. Ähnliche Dreipunkt-Stromrichter sind aus CN 202 856 630 U und CN 201 869 116 U bekannt.

Der Einsatz von Strombegrenzerinduktivitäten bei einem Stromrichter ist grundsätzlich aus DE 10 2005 049 208 A1 bekannt. Ein zur sicheren Abschaltung von Kurzschlusströmen geeigneter Spannungsumrichter, in dessen Halbbrücke beidseitig des dortigen Mttelabgriffs Drosseln angeordnet sind, ist ferner aus JP 2001 028881 A bekannt.

Der Erfindung liegt die Aufgabe zugrunde, einen im Hinblick auf die oben beschriebene Problematik verbesserten Dreipunkt-Stromrichter anzugeben.

Diese Aufgabe wird erfindungsgemäß gelöst durch die Merkmale des Anspruchs 1. Vorteilhafte und teils für sich gesehen erfinderische Ausgestaltungsvarianten und Weiterentwicklungen der Erfindung sind in den Unteransprüchen und der nachfolgender Beschreibung dargelegt.

Der erfindungsgemäße Dreipunkt-Stromrichter weist einen eingangsseitigen Gleichspannungskreis auf, der eine Hochpotentialschiene und eine Niederpotentialschiene umfasst. Bei dem Gleichspannungskreis kann es sich insbesondere um einen Gleichspannungs-Zwischenkreis handeln, der innerhalb eines Umrichters einem Gleichrichterabschnitt und einem Wechselrichterabschnitt zwischengeschaltet ist.

Desweiteren umfasst der Dreipunkt-Stromrichter mindestens eine Halbbrückenschaltung, die zwischen die Hochpotentialschiene und die Niederpotentialschiene geschaltet ist. Vorzugsweise umfasst der Dreipunkt-Stromrichter mehrere (insbesondere drei) Halbbrückenschaltungen, die parallel zueinander zwischen die Hochpotentialschiene und die Niederpotentialschiene geschaltet sind. Die Halbbrückenschaltungen sind nachfolgend auch als Stromrichterphasen bezeichnet.

Der Dreipunkt-Stromrichter ist als Dreipunkt-Stromrichter mit aktiven Klemmschaltern (Active-Neutral Point Clamped Converter) ausgebildet, wie er an sich beispielsweise aus DE 101 40 747 A1 bekannt ist. Die oder jede Halbbrückenschaltung ist hierzu (jeweils) aus drei Halbbrücken gebildet, nämlich aus
- einer hochpotentialseitigen (Eingangs-)Halbbrücke,
- einer niederpotentialseitigen (Eingangs-)Halbbrücke und
- einer (Ausgangs-)Halbbrücke.

Die beiden Eingangshalbbrücken sind in Reihe zwischen die Hochpotentialschiene und die Niederpotentialschiene des Gleichspannungskreises geschaltet. Die Ausgangshalbbrücke ist dagegen eingangsseitig zwischen einen Mittelabgriff der hochpotentialseitigen Eingangshalbbrücke und einen Mittelabgriff der niederpotentialseitigen Eingangshalbbrücke geschaltet. Ein Mittelabgriff der Ausgangshalbbrücke bildet eine Phasenklemme, an die bestimmungsgemäß ein Laststromkreis angeschlossen wird, oder ist mit einer solchen Phasenklemme verbunden.

Der Mittelabgriff der hochpotentialseitigen Eingangshalbbrücke ist nachfolgend auch als "erster Mittelabgriff" bezeichnet. Der Mittelabgriff der niederpotentialseitigen Eingangshalbbrücke ist nachfolgend auch als "zweiter Mittelabgriff" bezeichnet. Der Mittelabgriff der Ausgangshalbbrücke ist nachfolgend auch als "dritter Mittelabgriff" bezeichnet. Jeder der drei Mittelabgriffe ist jeweils zwischen zwei Leistungshalbleitern oder zwei Leistungshalbleitergruppen angeordnet.

So weist jede der drei Halbbrücken insbesondere in Reihe (d.h. in Reihenschaltung) jeweils einen hochpotentialseitigen Halbleiterschalter und einen niederpotentialseitigen Halbleiterschalter auf, zwischen denen der jeweilige Mittelabgriff angeordnet ist.

Konkret weist die hochpotentialseitige Eingangshalbbrücke einen ersten hochpotentialseitigen Halbleiterschalter und einen ersten niederpotentialseitigen Halbleiterschalter auf, die über den ersten Mittelabgriff in Reihe geschaltet sind. Entsprechend weist die niederpotentialseitige Eingangshalbbrücke einen zweiten hochpotentialseitigen Halbleiterschalter und einen zweiten niederpotentialseitigen Halbleiterschalter auf, die über den zweiten Mittelabgriff in Reihe geschaltet sind. Die Ausgangshalbbrücke weist schließlich einen dritten hochpotentialseitigen Halbleiterschalter und einen dritten niederpotentialseitigen Halbleiterschalter auf, die über den dritten Mittelabgriff in Reihe geschaltet sind. Jedem Halbleiterschalter ist insbesondere eine Freilaufdiode parallelgeschaltet.

Beiden Eingangshalbbrücken ist jeweils eine Kapazität parallelgeschaltet. Diese beiden Kapazitäten sind dabei hinsichtlich ihres Kapazitätswerts vorzugsweise gleich dimensioniert, so dass im statischen Fall über jeder Eingangshalbbrücke jeweils die Hälfte der zwischen der Hochpotentialschiene und der Niederpotentialschiene anliegenden Eingangsspannung abfällt. Das elektrische Potential zwischen den Kapazitäten ist als Mittelpunktpotential bezeichnet.

Erfindungsgemäß ist die Gesamtinduktivität (d.h. die Summe der Einzelinduktivitäten)
- innerhalb der Ausgangshalbbrücke,
- zwischen der hochpotentialseitigen Eingangshalbbrücke und der niederpotentialseitigen Eingangshalbbrücke,
- zwischen der hochpotentialseitigen Eingangshalbbrücke und der Ausgangshalbbrücke sowie
- zwischen der niederpotentialseitigen Eingangshalbbrücke und der Ausgangshalbbrücke
derart dimensioniert, dass das bei einem Ausfall eines beliebigen Leistungshalbleiters der Halbbrückenschaltung (oder einer von gegebenenfalls mehreren Halbbrückenschaltungen) ein Kurzschluss über einen zwischen den drei Halbbrücken dieser Halbbrückenschaltung gebildeten Kurzschlusskreis durch die intakten Leistungshalbleiter in diesem Kurzschlusskreis sicher abschaltbar ist. Im Fokus der Erfindung steht somit die sichere Abschaltung von stromrichterinternen Kurzschlüssen, die somit den Laststromkreis nicht einschließen, innerhalb einer Halbbrückenschaltung aber über eine einzelne Halbbrücke hinausgehen.

Die sichere Abschaltung äußert sich dabei insbesondere darin, dass im Kurzschlussfall - auch und gerade bei Ausfall eines Leistungshalbleiters - halbbrückenübergreifende elektrische Folgefehler vermieden werden. Durch die gezielte Dimensionierung der Induktivitäten innerhalb der Ausgangshalbbrücke sowie zwischen den drei Halbbrücken der oder jeder Halbbrückenschaltung wird also ausgeschlossen, dass der Strom- oder Spannungsanstieg infolge eines Einfachfehlers (d.h. des Ausfalls eines einzelnen Leistungshalbleiters einer Halbbrücke) den Ausfall mindestens eines weiteren Leistungshalbleiters einer anderen Halbbrücke derselben Halbbrückenschaltung nach sich zieht.

Dadurch, dass halbbrückenübergreifende elektrische Folgefehler ausgeschlossen werden, ist sichergestellt, dass bei einem Einfachfehler noch mindestens die halbe Eingangsspannung als Gegenspannung im Laststromkreis aufrecht erhalten wird. Der im Kurzschlussfall fließende Kurzschlussstrom lässt sich damit im Vergleich zu herkömmlichen Dreipunkt-Stromrichtern etwa auf ein Drittel reduzieren. Entsprechend verringern sich auch die Stoßmomente und die Belastung der Dioden im Stromrichter.

Die oder jede Halbbrückenschaltung ist dabei vorzugsweise derart ausgestaltet, dass die besagte Gesamtinduktivität (Lg) einen Induktivitätswert zwischen 100 nH (vorzugsweise 300 nH) und 10 µH (vorzugsweise 1 µH) aufweist

Zur Einstellung der Gesamtinduktivität ist vorzugsweise
- innerhalb der Ausgangshalbbrücke und/oder
- zwischen der hochpotentialseitigen Eingangshalbbrücke und der niederpotentialseitigen Eingangshalbbrücke und/oder
- zwischen der hochpotentialseitigen Eingangshalbbrücke und der Ausgangshalbbrücke und/oder
- zwischen der niederpotentialseitigen Eingangshalbbrücke und der Ausgangshalbbrücke
mindestens eine Drossel (also ein diskretes Bauteil in Form einer Magnetspule) angeordnet.

Vorzugsweise ist dabei innerhalb der Ausgangshalbbrücke beidseitig des dritten Mittelabgriffs jeweils eine Drossel angeordnet. Zusätzlich oder alternativ ist bevorzugt zwischen den drei Halbbrücken der oder jeder Halbbrückenschaltung jeweils eine weitere Drossel angeordnet.

Unter Wahrung der hinreichend großen Gesamtinduktivität können eine oder mehrere dieser Drosseln allerdings auch entfallen. Zudem können eine, mehrere oder sogar alle Drosseln auch durch eine baubedingte Streuinduktivität ersetzt sein.

In einer vorteilhaften Weiterentwicklung der Erfindung sind die drei Halbbrücken der oder jeder Halbbrückenschaltung derart gegeneinander mechanisch abgeschottet, dass eine mechanische oder thermische Zerstörung oder Beeinträchtigung einer Halbbrücke durch eine der beiden anderen Halbbrücken derselben Halbbrückenschaltung ausgeschlossen ist. Auf diese Weise wird verhindert, dass die sichere Kurzschlussabschaltung des Dreipunkt-Stromrichters durch mechanische oder thermische Komplikationen (mechanische oder thermische Folgefehler) gefährdet wird. Beispielsweise sind die einzelnen Halbbrücken derselben Halbbrückenschaltung hierbei hinreichend räumlich beabstandet (z.B. jeweils in einem Abstand von 10 cm bis 1m zueinander angeordnet) und/oder durch Trennwände oder Schutzgehäuse (z.B. aus Stahlblech mit einer Wandstärke von mindestens 1 mm oder aus Kunststoff mit einer Wandstärke von mindestens 5 mm) voneinander getrennt. Bei einem mehrphasigen Stromrichter können im Rahmen der Erfindung allerdings Halbbrücken verschiedener Halbbrückenschaltungen in einem gemeinsamen Gehäuse aufgenommen sein.

Vorzugsweise ist der Gleichspannungskreis derart ausgebildet, dass ein elektrischer Überschlag zwischen der Hochpotentialschiene und der Niederpotentialschiene ausgeschlossen ist. Vorzugsweise sind hierzu die Hochpotentialschiene und die Niederpotentialschiene des Gleichspannungskreises durch eine auf dem Mittelpunktspotential liegende Trennwand aus elektrisch leitfähigem Material, insbesondere Stahlblech getrennt.

Nachfolgend werden Ausführungsbeispiele der Erfindung anhand einer Zeichnung näher beschrieben. Darin zeigen:
- FIG 1: in einem schematisch vereinfachten Blockschaltbild einen dreiphasigen Dreipunkt-Stromrichter mit einem eingangsseitigen Gleichspannungskreis, der eine Hochpotentialschiene und eine Niederpotentialschiene umfasst, sowie mit drei Halbbrückenschaltungen, von denen jede über eine Phasenklemme mit jeweils einer Phase eines dreiphasigen Laststromkreises verbunden ist, und
- FIG 2: in einem elektrischen Schaltbild eine der drei Halbbrückenschaltungen des Stromrichters gemäß FIG 1.

Einander entsprechende Teile und Größen sind in allen Figuren stets mit gleichen Bezugszeichen versehen.

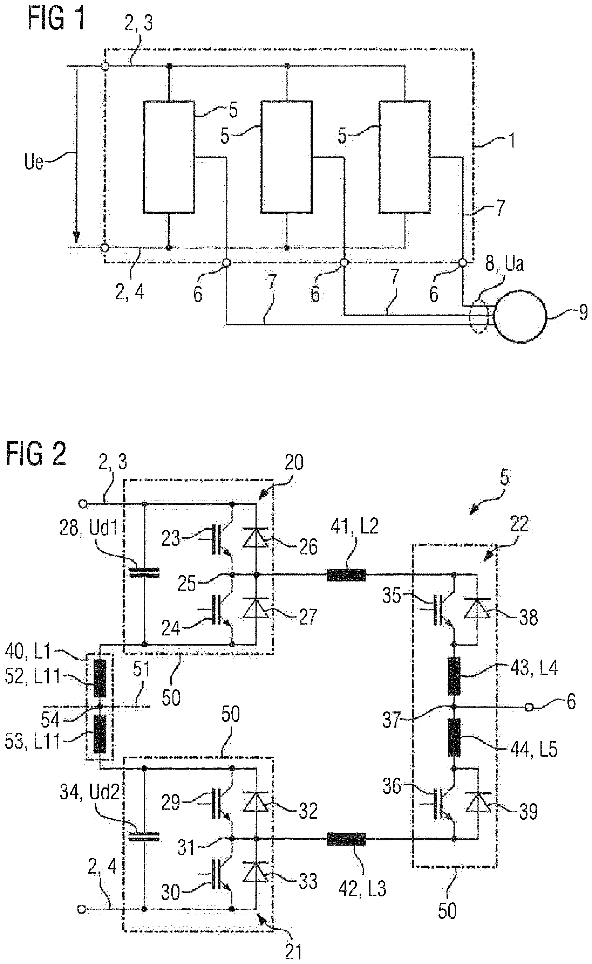

Der in FIG 1 dargestellte (Dreipunkt-)Stromrichter 1 umfasst eingangsseitig einen Gleichspannungskreis 2, über den dem Stromrichter 1 eine konstante Eingangsspannung Ue zugeführt ist. Der Gleichspannungskreis 2 umfasst eine Hochpotentialschiene 3 und eine Niederpotentialschiene 4, zwischen denen die Eingangsspannung Ue anliegt.

Der Stromrichter 1 umfasst des Weiteren drei - in FIG 1 lediglich angedeutete - Halbbrückenschaltungen 5, die in Parallelschaltung zueinander zwischen die Hochpotentialschiene 3 und die Niederpotentialschiene 4 geschaltet sind.

Jede der (auch als Stromrichterphasen bezeichneten) Halbbrückenschaltungen 5 ist über eine zugeordnete Phasenklemme 6 mit jeweils einer zugeordneten Phase 7 eines dreiphasigen Laststromkreises 8 verschaltet. In den Laststromkreis 8 ist beispielhaft eine elektrische Maschine 9 als Last geschaltet.

Im Betrieb des Stromrichters 1 wird die Eingangsspannung Ue durch die Halbbrückenschaltungen 5 in eine Ausgangsspannung Ua in Form einer dreiphasigen Wechselspannung gewandelt. Die Ausgangsspannung Ua wird über die Phasenklemmen 6 in den Laststromkreis 8 eingespeist.

In FIG 2 ist im Detail der Aufbau einer der drei baugleichen Halbbrückenschaltungen 5 dargestellt.

Wie aus der Darstellung ersichtlich, ist jede der Halbbrückenschaltungen 5 in drei Halbbrücken 20, 21 und 22 gegliedert, nämlich in
- eine hochpotentialseitige (Eingangs-)Halbbrücke 20,
- eine niederpotentialseitige (Eingangs-)Halbbrücke 21, und
- eine (Ausgangs-)Halbbrücke 22.

Die Halbbrücke 20 umfasst einen (ersten) hochpotentialseitigen Halbleiterschalter 23 und einen (ersten) niederpotentialseitigen Halbleiterschalter 24, die über einen (ersten) Mittelabgriff 25 in Serie geschaltet sind. Jedem der Halbleiterschalter 23 und 24 ist jeweils eine Freilaufdiode 26 bzw. 27 parallelgeschaltet. Der Reihenschaltung der Halbleiterschalter 23 und 24 ist eine Kapazität 28 parallelgeschaltet, über der eine Spannung Ud1 abfällt.

Die Halbbrücke 21 umfasst ebenso einen (zweiten) hochpotentialseitigen Halbleiterschalter 29 und einen (zweiten) niederpotentialseitigen Halbleiterschalter 30, die über einen (zweiten) Mittelabgriff 31 in Serie geschaltet sind. Jedem der Halbleiterschalter 29 und 30 ist jeweils eine Freilaufdiode 32 bzw. 33 parallelgeschaltet. Der Reihenschaltung der Halbleiterschalter 29 und 30 ist eine Kapazität 34 parallelgeschaltet, über der eine Spannung Ud2 abfällt.

Schließlich umfasst auch die Halbbrücke 22 einen (dritten) hochpotentialseitigen Halbleiterschalter 35 und einen (dritten) niederpotentialseitigen Halbleiterschalter 36, die über einen (dritten) Mittelabgriff 37 in Reihe geschaltet sind. Jedem der Halbleiterschalter 35 und 36 ist jeweils eine Freilaufdiode 38 bzw. 39 parallelgeschaltet.

Die Halbleiterschalter 23, 24, 29, 30, 35 und 36 sind vorzugsweise jeweils durch Bipolartransistoren mit isolierter Gate-Elektrode (Insulated-Gate Bipolar Transistor, kurz: IGBT) gebildet. Es können allerdings auch andere Halbleiterschalter zum Einsatz kommen.

Die Halbbrücken 20 und 21 sind in Reihe zwischen die Hochpotentialschiene 3 und die Niederpotentialschiene 4 geschaltet. Die Halbbrücke 22 ist eingangsseitig zwischen den Mittelabgriff 25 der Halbbrücke 20 und den Mittelabgriff 31 der Halbbrücke 21 geschaltet. Der Mittelabgriff 37 der Halbbrücke 22 ist mit der jeweils zugeordneten Phasenklemme 6 verschaltet.

Die Halbbrücken 20 und 21 sind jeweils niederinduktiv ausgebildet, so dass die Induktivität dieser Halbbrücken 20 und 21 vernachlässigt werden kann. Insbesondere hat die (in FIG 2 nicht explizit dargestellte) Streuinduktivität innerhalb jeder der Halbbrücken 20 und 21 einen Wert von weniger als 100 nH.

Dagegen ist in FIG 2 nach Art eines Ersatzschaltbildes
- zwischen den Halbbrücken 20 und 21 eine Induktivität 40 mit einem Induktivitätswert L1,
- zwischen den Halbbrücken 20 und 22 eine Induktivität 41 mit einem Induktivitätswert L2, und
- zwischen den Halbbrücken 21 und 22 eine Induktivität 42 mit einem Induktivitätswert L3
eingetragen.

Des Weiteren sind innerhalb der Halbbrücke 22 zwischen dem Halbleiterschalter 35 und dem Mittelabgriff 37 sowie zwischen dem Mittelabgriff 37 und dem Halbleiterschalter 36 zwei weitere Induktivitäten 43 bzw. 44 mit Induktivitätswerten L4 bzw. L5 eingetragen.

Die Induktivitäten 40 bis 44 sind vorzugsweise durch diskrete Bauteile in Form von Drosseln (d.h. magnetischen Drosselspulen) gebildet. Alternativ können aber auch eine, mehrere (d.h. mindestens zwei) oder sogar alle Induktivitäten 40 bis 44 durch die jeweils baubedingte Streuinduktivität der Halbbrückenschaltung 5 an der jeweiligen Stelle der Halbbrückenschaltung 5 gebildet sein.

In jedem Fall sind die Induktivitäten 40 bis 44 derart dimensioniert, dass die sich in Summe über die Induktivitätswerte L1 bis L5 ergebende Gesamtinduktivität Lg (Lg = L1 + L2 + L3 + L4 + L5) derart groß ist, dass die Halbbrückenschaltung 5 einen stromrichterinternen Kurzschluss zwischen den Halbbrücken 20 bis 22 auch dann noch sicher abschalten kann, wenn einer der Halbleiterschalter 23,24,29,30,35 oder 36 oder eine der Freilaufdioden 26,27,32,33,38 oder 39 aufgrund Sperrversagen ausgefallen ist und den ihm zugewiesenen Leitungszweig der Halbbrückenschaltung 5 somit kurzschließt.

Die Gesamtinduktivität Lg ist hierzu in einem Wertebereich zwischen 100 nH und 10 µH gewählt. Vorzugsweise ist die Gesamtinduktivität dabei größer 300 nH und/oder kleiner als 1 µH gewählt. In der konkreten Ausführung ist die Gesamtinduktivität vorzugsweise in Abhängigkeit des Nennstroms In der Halbleiterschalter 23,24,29,30,35,36 sowie in Abhängigkeit der Eingangsspannung Ue bestimmt. In besonders geeigneter Dimensionierung ist die Gesamtinduktivität Lg dabei derart festgelegt, dass der Wert des mathematischen Produkts Lg·In/Ue in einem Bereich von 25 ns (Nanosekunden) bis 150 ns liegt.

Die vorstehend beschriebene Dimensionierung ermöglicht, folgende - umrichterphaseninterne, aber halbbrückenübergreifende - Kurzschlusskreise sicher abzuschalten:
1. Erster Kurzschlusskreis (Kurzschlussstrom getrieben von Spannung Ud1):
   Dieser erste Kurzschlusskreis ist geschlossen über
      - den Kondensator 28
      - Halbleiterschalter 23 oder die parallele Freilaufdiode 26,
      - die Induktivität 41,
      - den Halbleiterschalter 35 oder die parallele Freilaufdiode 38,
      - die Induktivität 43,
      - die Induktivität 44,
      - den Halbleiterschalter 36 oder die parallele Freilaufdiode 39,
      - die Induktivität 42,
      - die Freilaufdiode 32, und
      - die Induktivität 40.
2. Zweiter Kurzschlusskreis (Kurzschlussstrom getrieben von Spannung Ud2):
   Dieser zweite Kurzschlusskreis ist geschlossen über
      - den Kondensator 34
      - die Induktivität 40
      - Freilaufdiode 27,
      - die Induktivität 41,
      - den Halbleiterschalter 35 oder die parallele Freilaufdiode 38,
      - die Induktivität 43,
      - die Induktivität 44,
      - den Halbleiterschalter 36 oder die parallele Freilaufdiode 39,
      - die Induktivität 42, und
      - den Halbleiterschalter 30 oder die parallele Freilaufdiode 33.
3. Dritter Kurzschlusskreis (Kurzschlussstrom getrieben von beiden Spannungen Ud1 und Ud2):
   Dieser dritte Kurzschlusskreis ist geschlossen über
      - den Kondensator 28,
      - den Halbleiterschalter 23 oder die parallele Freilaufdiode 26,
      - die Induktivität 41,
      - den Halbleiterschalter 35 oder die parallele Freilaufdiode 38,
      - die Induktivität 43,
      - die Induktivität 44,
      - den Halbleiterschalter 36 oder die parallele Freilaufdiode 39,
      - die Induktivität 42,
      - den Halbleiterschalter 30 oder die parallele Freilaufdiode 33,
      - den Kondensator 34 und
      - die Induktivität 40.

Insbesondere werden durch die hinreichend große Dimensionierung der Gesamtinduktivität Lg elektrische Folgefehler in den vorstehend beschriebenen Kurzschlusskreisen vermieden.

Als "Folgefehler" oder "Folgeausfall" wird dabei allgemein ein Ausfall (Sperrversagen) eines Halbleiterschalters oder der diesem parallelgeschalteten Freilaufdiode bezeichnet, der durch den vorherigen Ausfall ("Erstfehler" oder "Primärausfall") eines anderen Halbleiterschalters oder einer anderen Freilaufdiode ausgelöst wird. Ein solcher Folgefehler wird dabei dann als "elektrischer Folgefehler" bezeichnet, wenn eine Überspannung oder ein Überstrom infolge des Erstfehlers ursächlich für den Folgefehler ist.

Die Gesamtinduktivität Lg kann grundsätzlich beliebig auf die Induktivitäten 40 bis 44 verteilt sein. Vorzugsweise ist die Gesamtinduktivität Lg aber wie folgt verteilt:
- Induktivität 40: L1 = 1/4 Lg
- Induktivität 41: L2 = 1/4 Lg
- Induktivität 42: L3 = 1/4 Lg
- Induktivität 43: L4 = 1/8 Lg
- Induktivität 44: L5 = 1/8 Lg

Bei dem vorstehend beschriebenen Stromrichter 1 können insbesondere folgende Fehlervarianten auftreten:
1 Stromfluss über die Halbleiterschalter 23 und 35 oder die parallelen Freilaufdioden 38 und 26
   1.1 Erstfehler: Halbleiterschalter 24 oder Freilaufdiode 27 Induktivität im stromrichterinternen Kurzschlusskreis: keine
      Folgefehler: Halbleiterschalter 23 oder Freilaufdiode 26
      Noch intakt: Halbleiterschalter 29,30,35 und 36
      Gegenspannung für den Lastkurzschluss: Ud2
   1.2 Erstfehler: Halbleiterschalter 36 oder Freilaufdiode 39 Induktivität im stromrichterinternen Kurzschlusskreis: Lg
      Folgefehler: keine
      Noch intakt: Halbleiterschalter 23,24,29,30 und 35
      Kein Lastkurzschluss
   1.3 Erstfehler: Halbleiterschalter 30 oder Freilaufdiode 33 Induktivität im Stromrichterinternen Kurzschlusskreis: Lg
      Folgefehler: keine
      Noch intakt: Halbleiterschalter 23,24,29,35 und 36
      Kein Lastkurzschluss
2 Stromfluss über Freilaufdiode 27 und Halbleiterschalter 35 oder über Freilaufdiode 38 und Halbleiterschalter 24
   2.1 Erstfehler: Halbleiterschalter 23 oder Freilaufdiode 26 Induktivität im Stromrichterinternen Kurzschlusskreis: keine
      Folgefehler: Halbleiterschalter 24 oder Freilaufdiode 27
      Noch intakt: Halbleiterschalter 29,30,35 und 36
      Gegenspannung für den Lastkurzschluss: Ud2
   2.2 Erstfehler: Halbleiterschalter 36 oder Freilaufdiode 39
      Kein stromrichterinterner Kurzschlusskreis
      Folgefehler: keine
      Noch intakt: Halbleiterschalter 23,24,29,30 und 35
      Kein Lastkurzschluss
   2.3 Erstfehler: Halbleiterschalter 30 oder Freilaufdiode 33 Induktivität im Stromrichterinternen Kurzschlusskreis: Lg
      Folgefehler: keine
      Noch intakt: Halbleiterschalter 23,24,29,35 und 36
      Kein Lastkurzschluss
3 Kurzschluss zwischen der Hochpotentialschiene 3 und dem Mittelpunktspotential
   Gegenspannung für den Lastkurzschluss: Ud2

Für weitere Fehlervarianten, die sich gegenüber den vorstehend beschriebenen Fällen durch spiegelbildliche Fehler in der jeweils anderen Umrichterhälfte unterscheiden, gelten die vorstehend beschriebenen Verhältnisse entsprechend:
1' Stromfluss über die Halbleiterschalter 36 und 30 oder die parallelen Freilaufdioden 33 und 39
1.1' Erstfehler: Halbleiterschalter 29 oder Freilaufdiode 32 Induktivität im stromrichterinternen Kurzschlusskreis: keine
   Folgefehler: Halbleiterschalter 30 oder Freilaufdiode 33 Noch intakt: Halbleiterschalter 23,24,35 und 36 Gegenspannung für den Lastkurzschluss: Ud1
etc.

Infolge der hinreichenden Dimensionierung der Gesamtinduktivität Lg werden für alle vorstehend beschriebenen Fehlervarianten Kurzschlüsse folgender Typen sicher abgeschaltet:
Kurzschluss-Typ 1:
   In diesem Fall wird einer der Halbleiterschalter 23,24,29,30, 35 und 36 auf einem bestehenden Kurzschluss eingeschaltet.
Kurzschluss-Typ 2:
   In diesem Fall tritt der Kurzschluss auf, während der betreffende Halbleiterschalter 23,24,29,30,35 oder 36 eingeschaltet ist. Im Regelfall dieses Kurzschluss-Typs führt der Halbleiterschalter 23,24,29,30,35 und 36 beim Auftreten des Kurzschlusses einen von Null verschiedenen Strom. In einem Sonderfall dieses Kurzschluss-Typs ist der Laststrom beim Auftreten des Kurzschlusses dagegen Null.
Kurzschluss-Typ 3:
   In diesem Fall ist die dem Halbleiterschalter 23, 24, 29, 30, 35 oder 36 jeweils parallelgeschaltete Freilaufdiode 26,27,32, 33,38 bzw. 39 leitend, bevor der Kurzschluss auftritt.

Die vorstehend eingeführten Kurzschluss-Typen 1 bis 3 sind beispielsweise in S. Pierstorf, H.-G. Eckel: "Different Short Circuit Types of IGBT Voltage Source Inverters", PCIM Europe 2011, 17. - 19. Mai 2011, VDE Verlag (Berlin), ISBN 978-3-8007-3344-6 näher beschrieben.

Zusätzlich zu den vorstehend beschriebenen elektrischen Folgefehlern können grundsätzlich bei einem Stromrichter 1 der vorstehend beschriebenen Art auch mechanische oder thermische Folgefehler auftreten, bei denen der Erstfehler, also der Ausfall eines ersten Halbleiterschalters 23,24,29,30,35,36 oder der parallel geschalteten Freilaufdiode 26,27,32,33,38, 39 durch mechanische Wechselwirkung (z.B. umherfliegende Teile) oder thermische Wechselwirkungen (z.B. Verschmorung durch einen etwa auftretenden Lichtbogen) einen Folgefehler auslöst.

Um den Verlust der sicheren Abschaltbarkeit des Stromrichters 1 im Kurzschlussfall infolge eines solchen mechanischen oder thermischen Folgefehlers zu vermeiden, sind die Halbbrücken 20 bis 22 vorzugsweise gegeneinander mechanisch abgeschottet. Diese Abschottung kann grundsätzlich dadurch realisiert sein, dass die Halbbrücken 20 bis 22 in hinreichendem räumlichem Abstand zueinander angeordnet sind. Vorzugsweise sind die Halbbrücken 20 bis 22 aber durch Trennwände explosions- und lichtbogensicher voneinander getrennt. Insbesondere ist jede der Halbbrücken 20 bis 22 gemäß FIG 2 in einem eigenen Gehäuse 50 gekapselt und somit von den jeweils anderen Halbbrücken 20 bis 22 abgeschottet. Jedes Gehäuse 50 hat in geeigneter Ausführung Wände aus Stahlblech mit einer Wandstärke von mindestens 1 mm oder aus Kunststoff mit einer Wandstärke von mindestens 5 mm.

Sofern der Stromrichter 1 gemäß FIG 1 mehrphasig ausgebildet ist, können mehrere Halbbrücken 20 bis 22 auch gemeinsam in einem Gehäuse 50 angeordnet sein, sofern diese Halbbrücken 20 bis 22 zu verschiedenen Halbbrückenschaltungen 5 (also verschiedenen Stromrichterphasen) gehören. Beispielsweise sind jeweils die Halbbrücken 20 der drei Halbbrückenschaltungen 5 des Stromrichters 1 gemeinsam in einem ersten Gehäuse 50 angeordnet, während die Halbbrücken 21 der drei Halbbrückenschaltungen 5 gemeinsam in einem zweiten Gehäuse 50, und die drei Halbbrücken 22 der drei Halbbrückenschaltungen 5 in einem dritten Gehäuse 50 angeordnet sind.

Um elektrische Überschläge zwischen der Hochpotentialschiene 3 und der Niederpotentialschiene 4 des Gleichspannungskreises 2 auszuschließen, ist zwischen der Hochpotentialschiene 3 und der Niederpotentialschiene 4 eine Trennwand 51 aus elektrische leitfähigem Material, insbesondere Stahlblech angeordnet, die elektrisch auf das Mittelpunktspotential zwischen dem Potential der Hochpotentialschiene 3 und dem Potential der Niederpotentialschiene 4 gelegt ist. Hierzu ist die Induktivität 40 aufgeteilt in zwei in Serie geschaltete Teilinduktivtäten 52 und 53 mit gleichem Induktivitätswert L11 (mit L1 = 2·L11). Die Trennwand 51 ist hierbei mit einem Mittelabgriff 54 zwischen den Teilinduktivitäten 52 und 53 kontaktiert.

Die Mittelabgriffe 54 der drei Halbbrückenschaltungen 5 sind untereinander kurzgeschlossen, so dass für alle drei Halbbrückenschaltungen 5 ein gemeinsames Mittelpunktspotential besteht. Alternativ hierzu ist die - gemäß FIG 2 in die Teilinduktivitäten 52 und 53 gegliederte - Induktivität 40 einmal für alle drei Halbbrückenschaltungen vorhanden, so dass wiederum ein einheitliches Mittelpunktspotential für alle Halbbrückenschaltungen 5 definiert ist. In diesem Fall sind die hochpotentialseitigen Eingangshalbbrücken 20 aller Halbrückenschaltungen 5 in Parallelschaltung mit dem Pluspol der gemeinsamen Induktivität 40 verbunden, während die niederpotentialseitigen Eingangshalbbrücken 21 aller Halbbrückenschaltungen 5 in Parallelschaltung mit dem Minuspol der Induktivität 40 verbunden sind.

Zusammenfassend wird durch die Erfindung, insbesondere das vorstehend beschriebene Ausführungsbeispiel, eine sogenannter Dreipunkt-Stromrichter mit aktiven Klemmschaltern angegeben, bei dem in den möglichen stromrichterinternen Kurzschlusskreis über die drei Halbbrücken einer Stromrichterphase hinreichend viel Induktivität eingefügt wird, so dass die Halbleiterschalter 23,30,35 und 36 Kurzschlüsse in diesem Kurzschlusskreis in allen Betriebspunkten sicher abschalten können.

Der Gegenstand der Erfindung wird an dem vorstehend beschriebenen Ausführungsbeispiel besonders deutlich. Gleichwohl ist die Erfindung aber auf dieses Ausführungsbeispiel nicht beschränkt. Vielmehr können weitere Ausführungsformen der Erfindung von dem Fachmann aus der vorstehenden Beschreibung und den Ansprüchen abgeleitet werden.

## Patentansprüche

1. Dreipunkt-Stromrichter (1) mit einem eingangsseitigen Gleichspannungskreis (2), der eine Hochpotentialschiene (3) und eine Niederpotentialschiene (4) umfasst, und mit mindestens einer Halbbrückenschaltung (5), die eine hochpotentialseitige Eingangshalbbrücke (20), eine niederpotentialseitige Eingangshalbbrücke (21) und eine Ausgangshalbbrücke (22) aufweist,
- wobei die beiden Eingangshalbbrücken (20,21) in Reihe zwischen die Hochpotentialschiene (3) und die Niederpotentialschiene (4) geschaltet sind,
- wobei die Ausgangshalbbrücke (22) zwischen einen Mittelabgriff (25) der hochpotentialseitigen Eingangshalbbrücke (20) und einen Mittelabgriff (31) der niederpotentialseitigen Eingangshalbbrücke (21) geschaltet ist,
- wobei ein Mittelabgriff (37) der Ausgangshalbbrücke (22) eine Phasenklemme (6) zum Anschluss an einen Laststromkreis (8) bildet oder mit einer solchen Phasenklemme (6) verbunden ist,
**dadurch gekennzeichnet,**
**dass** die Gesamtinduktivität (Lg), die sich in Summe über die Induktivitätswerte (L1-L5)
- innerhalb der Ausgangshalbbrücke (22),
- zwischen der hochpotentialseitigen Eingangshalbbrücke (20) und der niederpotentialseitigen Eingangshalbbrücke (21),
- zwischen der hochpotentialseitigen Eingangshalbbrücke (20) und der Ausgangshalbbrücke (22), und
- zwischen der niederpotentialseitigen Eingangshalbbrücke (21) und der Ausgangshalbbrücke (22)
ergibt, in Abhängigkeit des Nennstroms (In) der Halbleiterschalter (23,24,29,30,35,36) und der Eingangsspannung (Ue) des Dreipunkt-Stromrichters (1) bestimmt ist, so dass bei einem Ausfall eines beliebigen Leistungshalbleiters (23,24,26,27, 29,30,32,33, 35,36,38,39) der Halbbrückenschaltung (5) ein Kurzschluss über einen zwischen den drei Halbbrücken (20-22) der Halbbrückenschaltung (5) gebildeten Kurzschlusskreis durch die intakten Leistungshalbleiter (23,24,26,27,29, 30,32,33,35,36,38,39) in diesem Kurzschlusskreis sicher abschaltbar ist.

2. Dreipunkt-Stromrichter (1) nach Anspruch 1, wobei die Gesamtinduktivität (Lg) derart dimensioniert ist, dass der Wert des mathematischen Produkts (Lg·In/Ue) der Gesamtinduktivität (Lg) mit dem durch die Eingangsspannung (Ue) geteilten Nennstrom (In) der Halbleiterschalter (23,24,29,30,35,36) in einem Bereich von 25 ns bis 150 ns liegt.

3. Dreipunkt-Stromrichter (1) nach Anspruch 1 oder 2, wobei die besagte Gesamtinduktivität (Lg) einen Induktivitätswert zwischen 100 nH und 10 µH aufweist.

4. Dreipunkt-Stromrichter (1) nach einem der Ansprüche 1 bis 3, wobei
- innerhalb der Ausgangshalbbrücke (22) und/oder
- zwischen der hochpotentialseitigen Eingangshalbbrücke (20) und der niederpotentialseitigen Eingangshalbbrücke (21) und/oder
- zwischen der hochpotentialseitigen Eingangshalbbrücke (20) und der Ausgangshalbbrücke (22), und/oder
- zwischen der niederpotentialseitigen Eingangshalbbrücke (21) und der Ausgangshalbbrücke (22)
mindestens eine Drossel angeordnet ist.

5. Dreipunkt-Stromrichter (1) nach einem der Ansprüche 1 bis 4, wobei die drei Halbbrücken (20-22) derselben Halbbrückenschaltung (5) derart gegeneinander räumlich und/oder mechanisch getrennt sind, dass eine mechanische oder thermische Zerstörung oder Beeinträchtigung einer Halbbrücke (20-22) durch eine der beiden anderen Halbbrücken (20-22) ausgeschlossen ist.

6. Dreipunkt-Stromrichter (1) nach einem der Ansprüche 1 bis 5, wobei der Gleichspannungskreis (2) derart ausgebildet ist, das ein elektrischer Überschlag zwischen der Hochpotentialschiene (3) und der Niederpotentialschiene (4) ausgeschlossen ist.

7. Dreipunkt-Stromrichter (1) nach einem der Ansprüche 1 bis 6, wobei die hochpotentialseitige Eingangshalbbrücke (20) und die niederpotentialseitigen Eingangshalbbrücke (21) jeweils niederinduktiv ausgebildet sind.

## Claims

1. Three-level converter (1) having an input-side DC circuit (2), which comprises a high-potential rail (3) and a low-potential rail (4), and having at least one half-bridge circuit (5), which comprises a high-potential side input half-bridge (20), a low-potential side input half-bridge (21) and an output half-bridge (22),
- wherein the two input half-bridges (20, 21) are connected in series between the high-potential rail (3) and the low-potential rail (4),
- wherein the output half-bridge (22) is connected between a centre tap (25) of the high-potential side input half-bridge (20) and a centre tap (31) of the low-potential side input half-bridge (21),
- wherein a centre tap (37) of the output half-bridge (22) forms a phase terminal (6) which is intended for connecting to a load circuit (8) or is connected to such a phase terminal (6),
**characterised in that**
the total inductance (Lg) given by the sum of the inductance values (L1-L5)
- within the output half-bridge (22),
- between the high-potential side input half-bridge (20) and the low-potential side input half-bridge (21),
- between the high-potential side input half-bridge (20) and the output half-bridge (22), and
- between the low-potential side input half-bridge (21) and the output half-bridge (22),
as a function of the rated current (In) of the semiconductor switches (23, 24, 29, 30, 35, 36) and the input voltage (Ue) of the three-level converter (1), is determined such that in the event of a failure of any one power semiconductor (23, 24, 26, 27, 29, 30, 32, 33, 35, 36, 38, 39) in the half-bridge circuit (5), a short-circuit via a short-circuit path formed between the three half-bridges (20-22) of the half-bridge circuit (5) can be reliably cut off by the intact power semiconductors (23, 24, 26, 27, 29, 30, 32, 33, 35, 36, 38, 39) in this short-circuit path.

2. Three-level converter (1) according to claim 1, wherein the total inductance (Lg) is designed such that the value of the mathematical product (Lg·In/Ue) of the total inductance (Lg) with the rated current (In) of the semiconductor switch (23, 24, 29, 30, 35, 36) divided by the input voltage (Ue) lies in a range of 25 ns to 150 ns.

3. Three-level converter (1) according to claim 1 or 2, wherein said total inductance (Lg) has an inductance value between 100 nH and 10 µH.

4. Three-level converter (1) according to one of claims 1 to 3, wherein at least one choke is arranged
- within the output half-bridge (22) and/or
- between the high-potential side input half-bridge (20) and the low-potential side input half-bridge (21) and/or
- between the high-potential side input half-bridge (20) and the output half-bridge (22), and/or
- between the low-potential side input half-bridge (21) and the output half-bridge (22).

5. Three-level converter (1) according to one of claims 1 to 4, wherein the three half-bridges (20-22) of the same half-bridge circuit (5) are spaced apart and/or mechanically separated from one another in such a way as to rule out mechanical or thermal damage to, or impairment of, a half-bridge (20-22) by one of the two other half-bridges (20-22).

6. Three-level converter (1) according to one of claims 1 to 5, wherein the DC circuit (2) is designed in such a way as to rule out an electrical flashover between the high-potential rail (3) and the low-potential rail (4).

7. Three-level converter (1) according to one of claims 1 to 6, wherein the high-potential side input half-bridge (20) and the low-potential side input half-bridge (21) are each designed to have a low inductance.

## Revendications

1. Convertisseur (1) à trois points comprenant un circuit (2) à tension continue du côté de l'entrée, qui comprend une barre (3) de potentiel haut et une barre (4) de potentiel bas, et comprenant au moins un circuit (5) en demi-pont, qui a un demi-pont (20) d'entrée du côté du potentiel haut, un demi-pont (21) d'entrée du côté du potentiel bas et un demi-pont (22) de sortie,
- dans lequel les deux demi-ponts (20, 21) d'entrée sont montés en série entre la barre (3) de potentiel haut et la barre (4) de potentiel bas,
- dans lequel le demi-pont (22) de sortie est monté entre une prise (25) médiane du demi-pont (20) d'entrée du côté du potentiel haut et une prise (31) médiane du demi-pont (21) d'entrée du côté du potentiel bas,
- dans lequel une prise (37) médiane du demi-pont (22) de sortie forme une borne (6) de phase de connexion à un circuit (8) de charge ou est reliée à une borne (6) de phase de ce genre,
**caractérisé**
**en ce que** l'inductance (Lg) totale, qui résulte de la somme des valeurs (L1 à L5) d'inductance
- à l'intérieur du demi-pont (22) de sortie,
- entre le demi-pont (20) d'entrée du côté du potentiel haut et le demi-pont (21) d'entrée du côté du potentiel bas,
- entre le demi-pont (20) d'entrée du côté du potentiel haut et le demi-pont (22) de sortie, et
- entre le demi-pont (21) d'entrée du côté du potentiel bas et le demi-pont (22) de sortie
est déterminée, en fonction du courant (In) nominal des interrupteurs (23, 24, 29, 30, 35, 36) à semiconducteur et de la tension (Ue) d'entrée du convertisseur (1) à trois points, de manière à ce que, si un semiconducteur (23, 24, 26, 27, 29, 30, 32, 33, 35, 36, 38, 39) de puissance quelconque du circuit (5) en demi-pont est défaillant, un court-circuit peut, par un circuit de court-circuit, formé entre les trois demi-ponts (20 à 22) du circuit (5) en demi-pont, se fermer d'une manière sûre dans ce circuit de court-circuit par les semiconducteurs (23, 24, 26, 27, 29, 30, 32, 33, 35, 36, 38, 39) de puissance intacts.

2. Convertisseur (1) à trois points suivant la revendication 1, dans lequel l'inductance (Lg) totale est dimensionnée, de manière à ce que la valeur du produit (Lg.In/Ue) mathématique de l'inductance (Lg) totale par le courant (In) nominal, divisée par la tension (Ue) d'entrée, des interrupteurs (23, 24, 29, 30, 35, 36) à semiconducteur soit dans une plage de 25 ns à 150 ns.

3. Convertisseur (1) à trois points suivant la revendication 1 ou 2, dans lequel l'inductance (Lg) totale a une valeur comprise entre 100 nH et 10 µH.

4. Convertisseur (1) à trois points suivant l'une des revendications 1 à 3, dans lequel
- au moins une bobine est montée
- à l'intérieur du demi-pont (22) de sortie et/ou
- entre le demi-pont (20) d'entrée du côté du potentiel haut et le demi-pont (21) d'entrée du côté du potentiel bas, et/ou
- entre le demi-pont (20) d'entrée du côté du potentiel haut et le demi-pont (22) de sortie, et/ou
- entre le demi-pont (21) d'entrée du côté du potentiel bas et le demi-pont (22) de sortie.

5. Convertisseur (1) à trois points suivant l'une des revendications 1 à 4, dans lequel les trois demi-ponts (20 à 22) du même circuit (5) en demi-pont sont séparés les uns des autres dans l'espace et/ou mécaniquement, de manière à exclure une destruction ou un endommagement mécanique ou thermique d'un demi-pont (20 à 22) par l'un des deux autres demi-ponts (20 à 22).

6. Convertisseur (1) à trois points suivant l'une des revendications 1 à 5, dans lequel le circuit (2) à tension continue est constitué de manière à exclure un claquage électrique entre la barre (3) de potentiel haut et la barre (4) de potentiel bas.

7. Convertisseur (1) à trois points suivant l'une des revendications 1 à 6, dans lequel le demi-pont (20) d'entrée du côté du potentiel haut et le demi-pont (21) d'entrée du côté du potentiel bas sont chacun faiblement inductifs.
